# EUROPÄISCHE PATENTSCHRIFT

(11) **EP 1 743 108 B1**
(45) Veröffentlichungstag und Bekanntmachung des Hinweises auf die Patenterteilung: **24.03.2010**
(21) Anmeldenummer: 05747780.4
(22) Anmeldetag: 13.04.2005
(51) Int. Cl.: F16J 15/32, F01D 11/00

(54) **Lamellendichtung, insbesondere für eine Gasturbine, sowie Verfahren zu deren Herstellung**
Leaf seal, particularly for a gas turbine, and method for the production thereof
Garniture d'étanchéité lamellaire, notamment pour turbine à gaz, et procédé permettant de la produire

(30) Priorität: 23.04.2004 DE 102004020378
(43) Veröffentlichungstag der Anmeldung: 17.01.2007
(73) Patentinhaber: Alstom Technology Ltd, 5400 Baden (CH)
(72) Erfinder: RHODES, Nigel Anthony, Newbold Verdon Leicestershire LE9 9LY (GB); VOGT, Ernst, CH-5236 Remigen (CH)
(86) Internationale Anmeldenummer: PCT/EP2005/051611
(87) Internationale Veröffentlichungsnummer: WO 2005/103534

(56) Entgegenhaltungen:
- EP-A- 0 933 567
- EP-A- 1 013 975
- EP-A- 1 479 953
- EP-A- 1 489 340
- US-B1- 6 343 792

## Beschreibung

### TECHNISCHES GEBIET

Die vorliegende Erfindung bezieht sich auf das Gebiet der Dichtung von rotierenden Maschinen. Sie betrifft eine Lamellendichtung gemäss dem Oberbegriff des Anspruchs 1, bzw. ein zugehöriges Herstellungsverfahren nach Anspruch 10.

### STAND DER TECHNIK

Eine Gasturbine besteht aus einem Rotor, auf dem verschiedene Stufen mit Verdichterschaufeln und Turbinenschaufeln angebracht werden, sowie einem Statorgehäuse. Der Rotor wird an jedem Ende der Rotorwelle in Lagern montiert.

Die Steuerung des Gasstroms innerhalb der Gasturbine ist von überragender Bedeutung im Hinblick sowohl auf die Funktionalität als auch die Effetikivität.An verschiedenen Stellen entlang der Rotorwelle werden Dichtungs-Technologien verwendet, um den axialen Gasstrom entlang der Welle zu verringern. Dieses ist besonders wichtig neben den Lagern, um zu verhindern, dass das Öl, das in den Lagern benutzt wird, durch die heissen Gase des Gasstroms überhitzt.

Traditionsgemäß werden in dieser Situation zwei Arten von Dichtungs-Technologien - meist alternativ, manchmal auch miteinander kombiniert - benutzt. Dies sind Labyrinthdichtungen und Bürstendichtungen.

Labyrinthdichtungen haben keinen Metall-Metall-Kontakt zwischen dem Rotor und dem Stator; daher ist ihr Dichtungseffekt verhältnismäßig klein. Jedoch bieten sie den Vorteil der niedrigen Rotationsreibung und der deswegen praktisch unbegrenzten Lebensdauer.

Bürstendichtungen andererseits haben höhere Reibungsverluste wegen der Reibung zwischen den Borstenenden und der Rotorwelle. Dies hat eine Abnutzung zur Folge, welche die Lebensdauer der Dichtung begrenzt. Die Bürstendichtungen bieten jedoch eine bessere Hemmung des axialen Gasstroms, besonders bei höheren axialen Druckdifferenzen.

Der Gebrauch dieser Technologien für das Abdichten in den Gasturbinen hat zahlreiche Einschränkungen. Erstens ist die axiale Druckdifferenz, der sie widerstehen können, noch ziemlich niedrig. Im Falle der Bürstendichtungen liegt dies an den Borsten, welche die gleiche Steifheit in axialer und in Umfangsrichtung haben: Hohe Drücke können die Borsten veranlassen, in axialer Richtung nachzugeben. Auch ist die Fähigkeit der Dichtungen, eine bedeutende Radialbewegung zuzulassen und ihr zu widerstehen, niedrig.

Das Design einer Bürstendichtung ist häufig ein Kompromiss zwischen dem Verwenden einer Unterstützungsplatte, die genügend axiale Unterstützung geben soll, und dem Nicht-Einschränken der Radialbewegung.

Um die Nachteile der bekannten Bürstendichtungen zu vermeiden, ist in der US-B1-6,343,792 eine Lamellendichtung ("leaf seal") vorgeschlagen worden, welche die gleiche Funktion wie entweder eine Labyrinthdichtung oder eine Bürstendichtung ausübt, aber die Vorteile von beiden aufweist. Anstelle der Borsten, die aus Drähten mit kreisförmigen Querschnitt hergestellt werden, werde dünnen Metalllamellen oder-blätter in bestimmter Anordnung zusammengebaut (siehe z.B. die Fig. 3 der US-B1-6,343,792 oder die Fig. 1 der vorliegenden Anmeldung).

US-B1-6343792 offenbart eine Lamellendichtung zur Abdichtung einer um eine Achse rotierenden Welle, insbesondere in einer Gasturbine, welche Lamellendichtung eine Vielzahl von untereinander beabstandeten Lamellen umfasst, die in einem konzentrischen Kreis um die Achse herum angeordnet und mittels durch Elektronenstrahl-Schweissen hergestellter Schweissverbindungen in ihrer Position fixiert sind, wobei die Lamellen mit ihren Flächen im wesentlichen parallel zu der Achse orientiert sind, wobei die Lamellen derartig ausgebildet und in der Lamellendichtung angeordnet sind, dass sie an den Seitenkanten entlang wenigstens einer sich über mehrere Lamellen erstreckenden Berührungslinie direkt oder über zwischenliegende Distanzelemente aneinanderstossen, und die Lamellen mit dem äusseren Ende in einem Gehäuse gehalten werden und mit dem Gehäuse verschweisst sind.

US-B1-6343792 offenbart ebenfalls ein Verfahren zum Herstellen einer Lamellendichtung, bei welchem Verfahren die einzelnen Lamellen unter Bildung wenigstens einer auf beiden Seiten verlaufenden Berührungslinie in ihren für die spätere Lamellendichtung charakteristischen Positionen angeordnet und fixiert werden, und die Lamellen mittels Elektronenstrahl-Schweissen miteinander in einem Gehäuse gehalten und mit dem Gehäuse verschweisst werden.

Die Lamellen, die mit ihren Flächen im wesentlichen parallel zur axialen Richtung orientiert sind, sind in der axialen Richtung viel steifer als in Umfangsrichtung. So kann die Dichtung höheren Druckdifferenzen widerstehen, ohne dabei deren Möglichkeiten zum Zulassen von Radialbewegungen einzuschränken. Auch bietet der breite Bereich auf dem Rotor, der von den Spitzen der Lamellen überstrichen wird, die Gelegenheit, während des Betriebes eine hydrodynamische Kraft zu erzeugen, welche die Lamellenspitzen von der Welle trennen kann. Auf diese Weise kann ein Abstand von einigen Mikron erzeugt und beibehalten werden, so dass die Abnutzung, die Reibungshitze und die Reibungsverluste bis fast auf Null verringert werden.

Das grundlegende Design bezieht eine Anzahl von dünnen Metalllamellen ein, die zwischen sich einen kontrollierten Luftspalt aufweisen und in einem vorgegebenen Winkel zum Radius befestigt werden. Der Luftspalt ist ein kritischer Designparameter: Er ermöglicht das Auftreten eines Luftstroms, um damit den hydrodynamischen Effekt zu erzeugen; er darf aber nicht so groß sein, um einen übermässigen axialen Leckstrom zu erlauben.

Zwei Varianten des Lamellendichtungs-Designs sind möglich: Bei der einen Variante werden die Lamellen nach unten geblasen, bei der anderen dagegen aufwärts. Die Variante mit den nach unten geblasenen Lamellen schliesst ein, dass man einen Abstand zwischen den Lamellenspitzen und der Welle während dem Zusammenbau und dem Anfahren hat, und dass dieser Spalt durch den Einsatz eines Luftstroms zwischen den Lamellen auf sehr kleine Werte heruntergefahren wird. Andererseits schliesst die Variante mit dem Aufwärtsblasen ein, dass man während des Anfahrens eine geringfügige gegenseitige Beeinflussung zwischen den Lamellenspitzen und der Welle hat, und einen Abstand erzeugt, wenn die Welle beschleunigt. In beiden Fällen ist die Strömung des Mediums durch die Luftspalte zwischen den Lamellen kritisch, ebenso wie die Steuerung des inneren Durchmessers der Dichtung, der durch die Lamellenspitzen erzeugt wird.

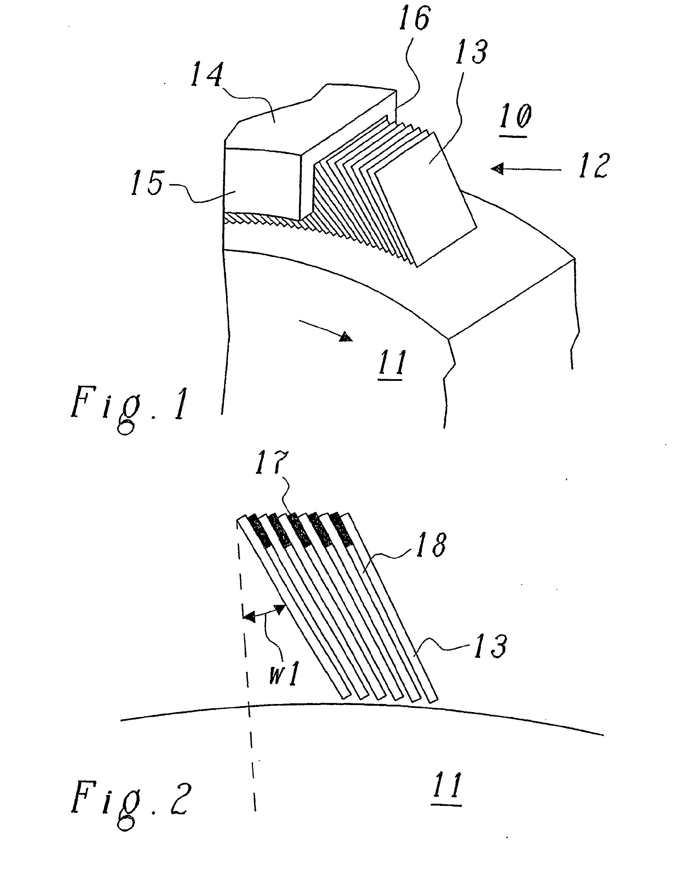

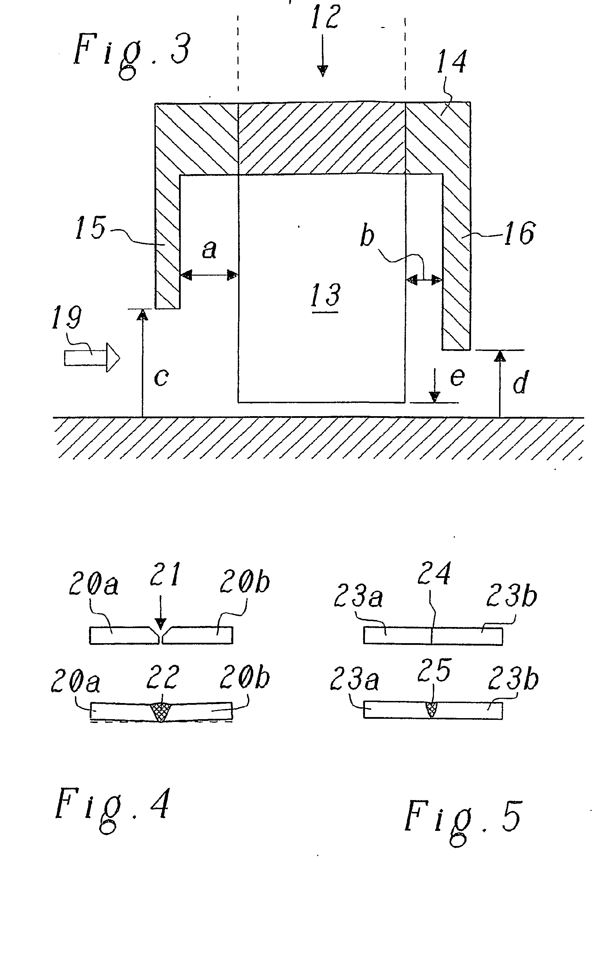

Der Luftstrom durch die Lamellen kann durch Verwendung einer vorderen und einer hinteren Platte verändert werden, die einen schmalen Spalt zwischen den Oberflächen des Lamellenpakets und den Platten frei lassen (siehe die o.g. Fig. 1 und 3). Ein sorgfältiges Design dieser Geometrien macht es möglich, die Aufwärts- oder Abwärtsblaseffekte zu steuern. Auch kann es wünschenswert sein, den Abwärtsblaseffekt durch eine aktive Druckzufuhr entlang der Länge der Lamellen oder nach innen von der Frontseite oder von den rückseitigen Richtungen zu unterstützen.

Einer der anderen Hauptvorteile des Lamellendichtungskonzeptes ist eine grössere Toleranz der Radialbewegung als bei den Labyrinth- oder Bürstendichtungen. Dies erfordert dort einen grossen Abstand zwischen dem inneren Durchmesser der vorderen und rückseitigen Platten und der Welle.

Abhängig von der gewählten Geometrie für die Dichtung, und von dem Durchmesser der zu dichtenden Welle, kann die Anzahl der Lamellen einige Tausend oder zig Tausende betragen. Die Genauigkeit, mit der diese hergestellt, zusammengebaut und verbunden werden können, wobei ein reproduzierbarer Luftspalt zwischen jedem Paar von Lamellen sichergestellt wird, ist kritisch für die erfolgreiche Implementierung jedes möglichen Dichtungsdesigns.

Das Fügeverfahren zum Fixieren der Lamellen in ihrer Position könnte eine mechanische Technik, wie Festklemmen, Schweissen oder Hartlöten oder jede mögliche Kombination davon sein. Es ist ganz offensichtlich wichtig, dass eine minimale Störung der Lamellen oder ihrer relativen Positionen während des Fügeprozesses auftritt.

In der o.g. Druckschrift US-B1-6,343,792 sind bereits verschiedene Fügeverfahren vorgeschlagen worden. Bei den zu den Fig. 1 bis 21 der Druckschrift gehörenden Ausführungsbeispielen werden die Lamellen mit ihrer oberen Querkante in ein Gehäuse hart eingelötet. Bei den Ausführungsbeispielen gemäss Fig. 22 bis 28 werden die Lamellen durch ein bekanntes Schweissverfahren wie Laserschweissen, Elektronenstrahl-Schweissen (Electron Beam Welding EBW) oder TIG-Schweissen in bogenförmigen Segmenten befestigt, wobei die Schweissung in radialer Richtung von aussen durch das Segment bis zu den oberen Querkanten der Lamellen erfolgt (siehe Fig. 25 und Beschreibung auf S. 20, Zeilen 7-48). Der Abstand zwischen den Lamellen kann dabei durch in die Lamellen eingeprägte Positionierelemente (Fig. 22 bis 24), durch separate Distanzelemente (Fig. 27A), oder durch integrale Distanzelemente (Fig. 27B) eingestellt werden. Zum Einsatz des Elektronenstrahl-Schweissens werden in der Druckschrift keine näheren Angaben gemacht.

Das Elektronenstrahl-Schweissen ist ein Verfahren, das auf einer industriellen Grundlage für die Entwicklung oder Produktion von aus Komponenten zusammengebauten Vorrichtungen in einem breiten Bereich von verschiedenen Legierungen und Geometrien zur Verfügung steht.

Die in hohem Grade fokussierte Natur des Hitzeeintrags und die Genauigkeit, mit der das Verfahren gesteuert werden kann, machen es besonders geeignet für das Schweissen von Lamellen, mit oder ohne Distanzelementen, für Lamellendichtungen.

Das Elektronenstrahl-Schweissen beinhaltet den Gebrauch einiger spezieller Ausrüstung, um den Elektronenstrahl zu erzeugen. Diese besteht aus einer Kathode, um Elektronen auszustrahlen, die dann eine evakuierte Säule hinunter mittels Hochspannung beschleunigt und auf das Substrat als schmaler Strahl mit genau kontrollierter Energie und Position, fokussiert werden.

Die Eindringtiefe des Strahls ändert sich mit der Strahlenergie und der Dichte des Zielmaterials, liegt aber gewöhnlich im Bereich von einigen 10 Mikron bis hin zu einigen Millimetern. Das betroffene Volumen des Materials wird schnell geschmolzen, und es wird eine Schmelzschweissverbindung mit dem umgebenden Material erzeugt.

Für den optimalen Einsatz des Elektronenstrahl-Schweissens sollten die zu schweissenden Oberflächen der miteinander zu verbindenden Teilelemente (23a,b in Fig. 5 der vorliegenden Anmeldung) in engem Kontakt sein (Stoss 24), damit sich eine belastbare Schweissnaht 25 ergibt. Dies ist verschieden von den meisten Schweissverfahren (siehe Fig. 4 der vorliegenden Anmeldung), bei denen normalerweise ein Zwischenraum 21 zwischen den zu verbindenden Teilelementen 20a,b als Füllraum für ein Füllmaterial benötigt wird, um eine belastbare Schweissnaht 22 zu erzeugen.

Die beim Elektronenstrahl-Schweissen anzutreffenden, dem Verfahren inhärenten niedrigeren Werte der Störung im Material machen das Verfahren besonders geeignet für das Schweissen von dünnen Komponenten wie den Lamellen, die besonders anfällig für solche Störungen sind.

Die vorliegende Erfindung geht von der Anwendung des Elektronenstrahl-Schweissens bei der Herstellung von Lamellendichtungen vor, die aus einzelnen Lamellen, mit oder ohne separate Distanzelemente, zusammengebaut werden.

Die Lamellen müssen dabei aus einem geeigneten Material hergestellt werden, das leicht durch Elektronenstrahl-Schweissen geschweisst werden kann. Das Design der Lamellen und ihre Zusammenstellung muss sorgfältig gesteuert werden, um das Fügen mittels Elektronenstrahl-Schweissen zu optimieren.

Insbesondere geht die vorliegende Erfindung davon aus, dass das erfolgreiche Elektronenstrahl-Schweissen auf einem engen Kontakt zwischen den zu verbindenden Oberflächen beruht, um die beim Schweissen auftretenden Störungen zu minimieren. Dieser enge Kontakt ist bei der Fügetechnik, wie sie in der Druckschrift US-B1-6,343,792 offenbart ist, nicht gewährleistet. Die Schweissung erfolgt dort in radialer Richtung von aussen durch das bogensegmentförmige Halteelement hindurch und schliesst die oberen Querkanten der Lamellen mit ein, die aufgrund ihrer Anordnung in einem Kreis voneinander relativ weit beabstandet sind. Eine solche Ausgestaltung des Schweissprozesses ist aus den oben genannten Gründen für die Anwendung des Elektronenstrahl-Schweissens mit erheblichen Nachteilen verbunden.

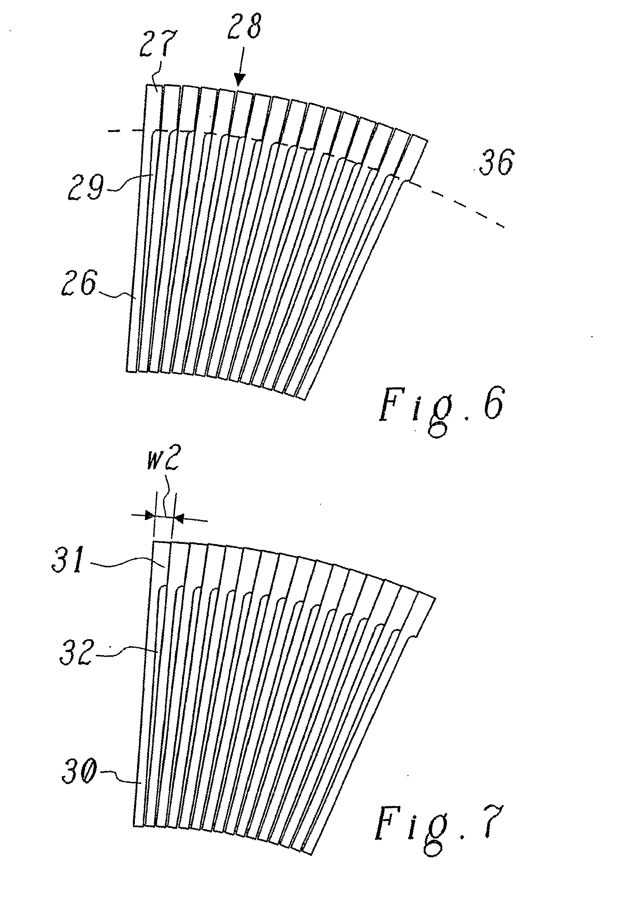

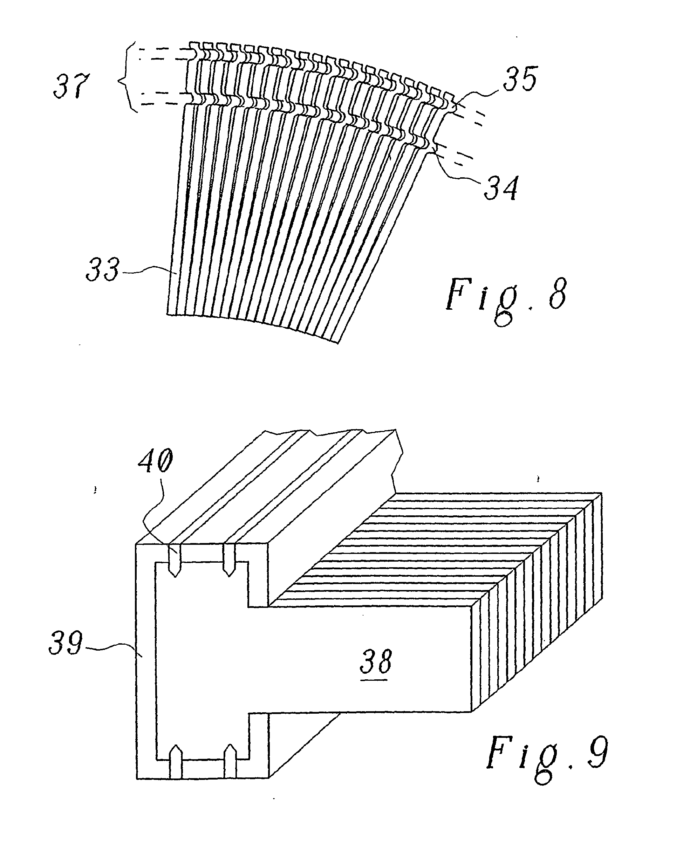

In der älteren, nicht vorveröffentlichten Anmeldung EP-A1-1 479 953 ist eine Lamellendichtung beschrieben, deren einzelne Lamellen im oberen Befestigurigsbereich eingeprägte Distanzelemente in Form von axial verlaufenden Rippen (Fig. 6, 7) und/oder in den seitlichen Randbereichen angeordneten kreisrunden Kuppen (Fig. 8) aufweisen. Die Lamellen werden durch umlaufende Schweissnähte an den Seitenrändern miteinander verbunden. Die entstehende Dichtung wird in einem dafür vorgesehenen Gehäuse gelagert (Fig. 1).

EP-A1-1479953 offenbart eine Lamellendichtung zur Abdichtung einer um eine Achse rotierenden Welle, insbesondere in einer Gasturbine, welche Lamellendichtung eine Vielzahl von untereinander beabstandeten Lamellen umfasst, die in einem konzentrischen Kreis um die Achse herum angeordnet und mittels durch Elektronenstrahl-Schweissen hergestellter Schweissverbindungen in ihrer Position fixiert sind, wobei die Lamellen mit ihren Flächen im wesentlichen parallel zu der Achse orientiert sind, wobei die Lamellen derartig ausgebildet und in der Lamellendichtung angeordnet sind, dass sie an den Seitenkanten entlang wenigstens einer sich über mehrere Lamellen erstreckenden Berührungslinie direkt oder über zwischenliegende Distanzelemente aneinanderstossen, und die Schweissverbindungen als entlang der wenigstens einen Berührungslinie geführte Schweissnähte und ausgebildet sind, die Lamellen mit dem äusseren Ende in einem Gehäuse gehalten werden.

EP-A1-1479953 offenbart ebenfalls ein Verfahren zum Herstellen einer Lamellendichtung bei welchem Verfahren die einzelnen Lamellen unter Bildung wenigstens einer auf beiden Seiten verlaufenden Berührungslinie in ihren für die spätere Lamellendichtung charakteristischen Positionen angeordnet und fixiert werden, und die Lamellen entlang der Berührungslinien mittels Elektronenstrahl-Schweissen miteinander verschweisst werden, und die Lamellen in einem Gehäusse gehalten werden.

### DARSTELLUNG DER ERFINDUNG

Es ist daher Aufgabe der Erfindung, eine geschweisste Lamellendichtung zu schaffen, welches die Nachteile bekannter Lamellendichtungen vermeidet und sich insbesondere durch deutlich verringerte Störungen im Bereich der Schweissverbindungen auszeichnet, sowie ein Verfahren zu deren Herstellung anzugeben.

Die Aufgabe wird durch die Gesamtheit der Merkmale der Ansprüche 1 und 10 gelöst. Der Kern der Erfindung besteht darin, die Lamellen derartig auszubilden und in der Lamellendichtung anzuordnen, dass sie an den Seitenkanten entlang wenigstens einer sich über mehrere Lamellen erstreckenden Berührungslinie direkt oder über zwischenliegende Distanzelemente aneinanderstossen, und die Schweissverbindungen als entlang der wenigstens einen Berührungslinie geführte und ein Gehäuse mit einbeziehende Schweissnähte auszubilden. Dadurch, dass die Elektronenstrahl-Schweissung entlang den Berührungslinien vorgenommen wird, an denen die zu verbindenden Elemente direkt aneinanderstossen, ergeben sich besonders hochwertige Schweissverbindungen, die insbesondere den in einer Gasturbine auftretenden Belastungen gewachsen sind.

Bevorzugt sind zur Einstellung des Abstandes zwischen den Lamellen Distanzelemente vorgesehen, wobei die wenigstens eine Berührungslinie im Bereich der Distanzelemente verläuft und die Distanzelemente im äusseren Endbereich der Lamellen angeordnet sind. Die Distanzelemente können entweder an den Lamellen als Bereiche grösserer Dicke ausgebildet sein, wobei die Distanzelemente entweder eine konstante Dicke aufweisen oder mit nach innen zu abnehmender Dicke ausgebildet sind.

Die Distanzelemente können aber auch als in die Lamellen eingeprägte Elemente ausgebildet sein. In diesem Fall lassen sich die Lamellen durch einen einfachen Stanz- und Prägeprozess herstellen und anschliessend leicht aufeinander ausrichten und miteinander verbinden (verschweissen).

Bevorzugt weist jede Lamelle in radialer Richtung wenigsten zwei hintereinander angeordnete, eingeprägte Distanzelemente aufweist, welche die relative Position der Lamellen, nämlich Abstand und Neigung, zueinander festlegen.

Die Lamellen können in ihrer Gesamtheit mit dem äusseren Ende in einem Gehäuse gehalten werden und mit dem Gehäuse verschweisst sein, wobei die Verbindung der Lamellen untereinander und mit dem Gehäuse vorzugsweise über seitlich angeordnete in axialer Richtung verlaufende Schweissnähte erfolgt, welche durch das Gehäuse hindurch bis zu den Lamellen reichen.

Die Lamellen können aber auch an der Aussenseite mit einem aussen umlaufenden ganzen oder segmentierten Stützring verschweisst sein, der dann in einem Gehäuse gehalten wird.

Die Ausgestaltung des erfindungsgemässen Verfahren zeichnet sich dadurch aus, dass die Lamellen in einem Gehäuse gehalten und durch das Gehäuse hindurch untereinander und mit dem Gehäuse verschweisst werden. Am besten ist es gerade Sektionen zu verschweissen, die dann gebogen werden.

Zur Anordnung der Lamellen werden vorzugsweise in die Lamellen integrierte Distanzelemente verwendet, die durch einen Prägeprozess oder durch einen Ätzprozess (PCM = Photochemical Machining) in die Lamellen eingeprägt werden. Nach dem Herstellen der mit den Distanzelementen versehenen Lamellen werden die Lamellen in eine Einspannvorrichtung eingebracht, in welcher sie sich in ihren für die spätere Lamellendichtung charakteristischen Positionen fest ausrichten.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Seitenansicht den typischen Aufbau einer Lamellendichtung, wie sie bei einer Gasturbine Anwendung findet;
- Fig. 2: in der Seitenansicht in Achsrichtung die aus der radialen Richtung geneigte Anordnung einzelner Lamellen mit ihren dazwischen liegenden Distanzelementen;
- Fig. 3: die Ansicht einer zu Fig. 1 vergleichbaren Lamellendichtung in Umfangsrichtung mit einer vorderen und hinteren Endplatte;
- Fig.4: die Konfiguration der Schweissstelle bei einer herkömmlichen Schweissung mit Füllmaterial;
- Fig. 5: im Vergleich zu Fig. 4 die Konfiguration der Schweissstelle bei einer Elektronenstrahl-Schweissung, bei der die zu verschweissenden Teilelemente mit engem Stoss aneinanderstossen;
- Fig. 6: in der Ansicht in Achsrichtung ein Paket von Lamellen mit integralen Distanzelementen konstanter Dicke, die aufgrund des Winkelversatzes am Übergang zwischen Distanzelement und Lamellenblatt eine durchgehende, kreisförmige Berührungslinie bilden, entlang welcher sie gemäss der Erfindung miteinander verschweisst werden;
- Fig. 7: in einer zu Fig. 6 vergleichbaren Darstellung ein Paket von Lamellen mit integralen, leicht keilförmigen Distanzelementen, die sich, wenn der Keilwinkel gleich dem Winkelversatz zwischen benachbarten Lamellen ist, über die gesamte Fläche der Distanzelemente berühren;
- Fig. 8: in einer zu Fig. 6 vergleichbaren Darstellung ein Paket von Lamellen mit integralen, geprägten Paaren von Distanzelementen, die automatisch den richtigen Abstand und Winkelversatz zwischen benachbarten Lamellen einstellen und fixieren und eine Mehrzahl von konzentrischen, zum Verscheissen geeigneten Berührungslinien ausbilden;
- Fig. 9: einen Abschnitt einer Lamellendichtung gemäss einem Ausführungsbeispiel der Erfindung, bei dem die Schweissung der Lamellen von den Seiten durch ein die Lamellen aufnehmendes Gehäuse ausgeführt wird;

### WEGE ZUR AUSFÜHRUNG DER ERFINDUNG

In Fig. 1 ist in einer perspektivischen Seitenansicht der typische Aufbau einer Lamellendichtung dargestellt, wie sie bei einer Gasturbine Anwendung findet. Die Lamellendichtung 12 dichtet eine in Pfeilrichtung rotierende Rotorwelle 11 der Gasturbine 10 gegen ein Gehäuse 14. Im kreisringförmigen Zwischenraum zwischen der Rotorwelle 11 und dem Gehäuse 14 ist in einem Ring ein Paket von eng voneinander beabstandeten dünnen Lamellen 13 angeordnet. Die Lamellen 13 sind mit ihrer Fläche parallel zur Drehachse der Maschine orientiert. Die Lamellen sind gemäss Fig. 2 aus der radialen Richtung um einen Winkel w1 verkippt und haben zwischen sich jeweils einen schmalen Spalt bzw. Zwischenraum 18, der vorzugsweise durch zwischen den Lamellen 13 angeordnete Distanzelemente 17 festgelegt wird. Die Distanzelemente 17 der Fig. 2 sind als separate Elemente dargestellt. Sie können aber auch - wie in Fig. 6-8 gezeigt - in die Lamellen integriert sein.

Gemäss Fig. 1 und 3 kann der Luftstrom durch die Lamellen 13 durch Verwendung einer vorderen und einer hinteren Endplatte 15 bzw. 16 verändert werden, die einen schmalen Spalt zwischen den Oberflächen des Lamellenpakets und den Endplatten 15, 16 frei lassen (Abstände a und b in Fig. 3). Ein sorgfältiges Design dieser Geometrien macht es möglich, die eingangs erwähnten Aufwärts- oder Abwärtsblaseffekte zu steuern. Auch kann es wünschenswert sein, den Abwärtsblaseffekt durch eine aktive Druckzufuhr entlang der Länge der Lamellen oder nach innen von der Frontseite oder von den rückseitigen Richtungen zu unterstützen.

Einer der anderen Hauptvorteile des in Fig. 1 bzw. 3 dargestellten Lamellendichtungskonzeptes ist eine grössere Toleranz der Radialbewegung als bei den Labyrinth- oder Bürstendichtungen. Dies erfordert einen grossen Abstand zwischen dem inneren Durchmesser der vorderen und rückseitigen Endplatten 15, 16 und der Rotorwelle 11 (Abstände c und d in Fig. 3). Der Spalt zwischen den Lamellen 13 und der Rotorwelle (Abstand e in Fig. 3) beträgt nur wenige Mikron.

Das erfolgreiche Elektronenstrahl-Schweissen beruht auf einem engen Kontakt zwischen den zu verbindenden Oberflächen der Teilelemente 23a,b (Fig.5), um die auftretenden Störungen zu minimieren. Diese Anforderungen müssen bei den zusammengebauten Lamellen so gut wie möglich erfüllt sein.

Wenn die Lamellen eines Paketes direkt in ihre abschließenden, kreisförmige Positionen zusammengefügt werden, dann muss sorgfältig auf den Winkelversatz jeder Lamelle relativ zu ihren Nachbarn geachtet werden. Dies wird in Fig. 6 anhand eines ersten bevorzugten Ausführungsbeispiels der Erfindung gezeigt. Die Lamellen 26 haben hier integrale Distanzelement 27 in Form von verdickten Endbereichen mit konstanter Dicke. Werden die einzelnen Lamellen 26 des Pakets mit dem erforderlichen Winkelversatz zusammengestellt, ergeben sich zwischen den Lamellen 26 Spalte bzw. Zwischenräume 29 und am Aussenrand oder oberen Rand des Pakets keilförmige Spalte 28, so dass der äussere Rand nicht die für eine optimale Elektronenstrahl-Schweissung notwendige enge Berührung der benachbarten Lamellen aufweist. Die Berührung zwischen den benachbarten Lamellen findet vielmehr am Übergang zwischen den Distanzelementen 27 und dem Lamellenblatt statt und bildet die gestrichelt eingezeichnete Berührungslinie 36.

Die gezeigte Berührungslinie 36 des Punkt-zu-Punkt-Kontaktes zwischen den Lamellen 26 ist die bevorzugte Linie für das Elektronenstrahl-Schweissen. Eine Elektronenstrahl-Schweissung, die am äußeren Rand des Lamellenpaketes angewendet wird, wo die Spalte 28 zwischen den Lamellen 26 gezeigt sind, neigt dagegen eher zur Schrumpfungsstörung. Auch ist es schwieriger, die Eindringtiefe der Schweissung zu steuern, weil der Elektronenstrahl ohne Widerstand in den Spalt 28 zwischen den Lamellen 26 eindringen kann.

Einige mögliche Alternativen für das Verringern dieses Problems werden in den Fig. 7 und 8 gezeigt. In Fig. 7 haben die Lamellen 30 ebenfalls an ihren äusseren Enden integrale Distanzelemente 31 in Form verdickter Bereiche, um zwischen den Lamellen 30 die notwendigen Spalte bzw. Zwischenräume 32 zu schaffen. Der Winkelversatz zwischen benachbarten Lamellen wird in diesem Ausführungsbeispiel dadurch erreicht und festgelegt, dass die integralen Distanzelemente 31 keilförmig mit einem Keilwinkel w2 ausgebildet sind, derart, dass sich ihre Dicke nach innen zu gleichmässig verringert. Dies hat zur Folge, dass sich die Lamellen 30 über die gesamte Fläche der integralen Distanzelemente 31 berühren, d.h. die Berührungslinie sich zu einem Berührungsband erweitert.

Auch in Fig. 8 haben die Lamellen 33 an ihren äusseren Enden integrale Distanzelemente 34, 35 in Form von eingeprägten waagerechten Sicken, die in radialer Richtung hintereinander angeordnet und voneinander beabstandet sind. Bei geeigneter Ausformung der Distanzelemente 34, 35 stellt sich zwischen benachbarten Lamellen sowohl der richtige Winkelversatz als auch der richtige Abstand selbsttätig ein, so dass die geprägten Lamellen 33 auf einfache Weise zu Paketen zusammengefasst und dann gleich verschweisst werden können. Bei den in Fig. 8 dargestellten integralen Distanzelementen 34, 35 entstehen die gestrichelt eingezeichneten vier Berührungslinien 37, entlang derer die Elektronenstrahl-Schweissung vorgenommen werden kann.

Die in Fig. 6-8 gezeigten Ausgestaltungen beziehen sich auf Lamellen mit integralen Distanzelementen. Ähnliche Konzepte können aber auch ebenso gut auf Lamellen mit separaten Distanzelementen angewandt werden.

Der insbesondere in Fig. 8 gezeigte Einsatz von derart ausgebildeten Distanzelementen hat eine Anzahl von Vorteilen. Erstens kann der Winkelversatz von Lamelle zu Lamelle genau eingestellt werden, wodurch die Notwendigkeit einer genauen Zusammenstellung der Lamellen verringert wird. Zweitens gibt es, wie die Fig. 8 deutlich zeigt, zahlreiche Linien, auf die das Elektronenstrahl-Schweissen fokussiert werden kann, um eine annehmbare Schweissung mit geringer Störung zu erzeugen.

Wie bereits erwähnt, können die Lamellen gemäss Fig. 8 durch ein Verfahren wie z.B. Prägen gebildet werden. Das Prägen ermöglicht die Herstellung von aus der Fläche heraustretenden Merkmalen, die mehr als einen Vorteil hat: Mit einem geeigneten Design und einer geeigneten Entwicklung können geprägte Merkmale wie die oben gezeigten zu einer genauer Positionierung der Lamellen relativ zueinander verhelfen; sie können weiterhin den notwendigen Winkelversatz von einer Lamelle zur nächsten bewirken; und sie können Kontaktpunkte zur Verfügung stellen, um die Wirksamkeit der Elektronenstrahl-Schweissung zu erhöhen.

Eine andere, in Fig. 9 dargestellte Möglichkeit des Elektronenstrahl-Schweissens besteht darin, dass ein Gehäuse 39 direkt um die Außenseite der örtlich festgelegten Enden der Lamellen 38 geschweißt werden kann. Die T-förmigen Lamellen 38 können in dem Gehäuse zusammengestellt und positioniert werden, und dann dringt die Elektronenstrahl-Schweissung seitlich an den vorgegebenen Linien durch das Gehäuse 39 ein und schweißt die Lamellen 38 durch entsprechende Schweissnähte 40 in einem einzigen Schritt zusammen.

Wenn - wie dies in Fig. 8 gezeigt ist - ein Prägeschritt bei der Herstellung der Lamellen verwendet werden soll, und zwar entweder eigenständig oder in Verbindung mit einem anderen Blechformverfahren, gibt es die Möglichkeit, die Lamellen direkt vom Prägewerkzeug in eine passend entworfene Spannvorrichtung fallen zu lassen. Diese (in den Figuren nicht gezeigte) Spannvorrichtung orientiert und positioniert dann die Lamellen in ihren relativen Positionen. Dies kann mit der gewünschten abschließenden Biegung oder in einem geraden Abschnitt sein. Solch ein gerader Abschnitt kann in einer linearen Position geschweißt werden, die geschweißten Längen können dann zur endgültigen Krümmung gebogen werden, und zwar vor dem abschließenden Schweissen an einen Stützring oder einen anderen struktureller Träger.

### BEZUGSZEICHENLISTE

- 10: Gasturbine
- 11: Rotorwelle
- 12: Lamellendichtung
- 13: Lamelle
- 14: Gehäuse
- 15,16: Endplatte
- 17: Distanzelement (separat)
- 18: Spalt (Zwischenraum)
- 19: Gasstrom
- 20a,b: Teilelement
- 21: Zwischenraum (Füllraum)
- 22,25: Schweissnaht
- 23a,b: Teilelement
- 24: Stoss
- 26,30,33: Lamelle
- 27,31: Distanzelement (integral)
- 28: Spalt (keilförmig)
- 29,32: Spalt (Zwischenraum)
- 34,35: Distanzelement (geprägt)
- 36,37: Berührungslinie
- 38: Lamelle
- 39: Gehäuse
- 40: Schweissnaht
- 41,42: Schweissnaht
- 43: Stützring
- a,..,e: Abstand
- w1,w2: Winkel

## Patentansprüche

1. Lamellendichtung (12) zur Abdichtung einer um eine Achse rotierenden Welle, insbesondere in einer Gasturbine (10), welche Lamellendichtung (12) eine Vielzahl von untereinander beabstandeten Lamellen (26, 30, 33, 38) umfasst, die in einem konzentrischen Kreis um die Achse herum angeordnet und mittels durch Elektronenstrahl-Schweissen hergestellter Schweissverbindungen (40, 41, 42) in ihrer Position fixiert sind, wobei die Lamellen (26, 30, 33, 38) mit ihren Flächen im wesentlichen parallel zu der Achse orientiert sind, wobei die Lamellen (26, 30, 33, 38) derartig ausgebildet und in der Lamellendichtung (12) angeordnet sind, dass sie an den Seitenkanten entlang wenigstens einer sich über mehrere Lamellen (26, 30, 33, 38) erstreckenden Berührungslinie (36, 37) direkt oder über zwischenliegende Distanzelemente (27, 31, 34, 35) aneinanderstossen, und die Schweissverbindungen als entlang der wenigstens einen Berührungslinie (36, 37) geführte Schweissnähte (40, 41, 42) ausgebildet sind, wobei die Lamellen (38) mit dem äusseren Ende in einem Gehäuse (39) gehalten werden und durch das Gehäuse (39) hindurch untereinander und mit dem Gehäuse (39) verschweisst sind.

2. Lamellendichtung nach Anspruch 1, **dadurch gekennzeichnet, dass** die Verbindung der Lamellen (38) untereinander und mit dem Gehäuse (39) über seitlich angeordnete in axialer Richtung verlaufende Schweissnähte (40) erfolgt, welche durch das Gehäuse (39) hindurch bis zu den Lamellen (38) reichen.

3. Lamellendichtung nach Anspruch 1 oder 2, **dadurch gekennzeichnet, dass** zur Einstellung des Abstandes zwischen den Lamellen (26, 30, 33, 38) Distanzelemente (27, 31, 34, 35) vorgesehen sind, und dass die wenigstens eine Berührungslinie (36, 37) im Bereich der Distanzelemente (27, 31, 34, 35) verläuft.

4. Lamellendichtung nach Anspruch 3, **dadurch gekennzeichnet, dass** die Distanzelemente (27, 31, 34, 35) im äusseren Endbereich der Lamellen (26, 30, 33, 38) angeordnet sind.

5. Lamellendichtung nach Anspruch 3 oder 4, **dadurch gekennzeichnet, dass** die Distanzelemente (27, 31) an den Lamellen (26, 30) als Bereiche grösserer Dicke ausgebildet sind.

6. Lamellendichtung nach Anspruch 5, **dadurch gekennzeichnet, dass** die Distanzelemente (27) eine konstante Dicke aufweisen.

7. Lamellendichtung nach Anspruch 5, **dadurch gekennzeichnet, dass** die Distanzelemente (31) mit nach innen zu abnehmender Dicke ausgebildet sind.

8. Lamellendichtung nach Anspruch 3 oder 4, **dadurch gekennzeichnet, dass** die Distanzelemente (34, 35) als in die Lamellen (33) eingeprägte Elemente ausgebildet sind.

9. Lamellendichtung nach Anspruch 8, **dadurch gekennzeichnet, dass** jede Lamelle (33) in radialer Richtung wenigsten zwei hintereinander angeordnete, eingeprägte Distanzelemente (34,35) aufweist, welche die relative Position der Lamellen zueinander festlegen.

10. Verfahren zum Herstellen einer Lamellendichtung nach Anspruch 1, bei welchem Verfahren die einzelnen Lamellen (26, 30, 33, 38) unter Bildung wenigstens einer auf beiden Seiten verlaufenden Berührungslinie (36, 37) in ihren für die spätere Lamellendichtung charakteristischen Positionen angeordnet und fixiert werden, und die Lamellen entlang der Berührungslinien (36, 37) mittels Elektronenstrahl-Schweissen miteinander verschweisst werden, wobei die Lamellen (38) in einem Gehäuse (39) gehalten und durch das Gehäuse (39) hindurch untereinander und mit dem Gehäuse (39) verschweisst werden.

11. Verfahren nach Anspruch 10, **dadurch gekennzeichnet, dass** zur Anordnung der Lamellen (26, 30, 33, 38) in die Lamellen (26, 30, 33, 38) integrale Distanzelemente.(27, 31, 34, 35) verwendet werden.

12. Verfahren nach Anspruch 11, **dadurch gekennzeichnet, dass** die Distanzelemente (34, 35) durch einen Prägeprozess in die Lamellen (33) eingeprägt werden.

13. Verfahren nach Anspruch 11 oder 12, **dadurch gekennzeichnet, dass** nach dem Herstellen der mit den Distanzelementen (27, 31, 34, 35) versehenen Lamellen (26, 30, 33, 38) die Lamellen (26, 30, 33, 38) in eine Einspannvorrichtung eingebracht werden, in welcher sie sich in ihren für die spätere Lamellendichtung charakteristischen Positionen fest ausrichten.

14. Verfahren nach Anspruch 10, **dadurch gekennzeichnet, dass** das Schweissen in axialer Richtung erfolgt.

## Claims

1. Leaf seal (12) for sealing a shaft rotating about an axis, in particular in a gas turbine (10), which leaf seal (12) comprises a multiplicity of spaced-apart leaves (26, 30, 33, 38) which are arranged in a concentric circle around the axis and are fixed in their position by means of welded connections (40, 41, 42) produced by electron beam welding, the leaves (26, 30, 33, 38), with their surfaces, being oriented essentially parallel to the axis, the leaves (26, 30, 33, 38) being designed in such a way and arranged in the leaf seal (12) in such a way that they abut against one another at the side edges directly or via intermediate spacers (27, 31, 34, 35) along at least one contact line (36, 37) extending over a plurality of leaves (26, 30, 33, 38), and the welded connections being designed as welds (40, 41, 42) directed along the at least one contact line (36, 37), the leaves (38) being held with the outer end in a housing (39) and being welded through the housing (39) to one another and to the housing (39).

2. Leaf seal according to Claim 1, **characterized in that** the leaves (38) are connected to one another and to the housing (39) via laterally arranged welds (40) which run in an axial direction and extend through the housing (39) up to the leaves (38).

3. Leaf seal according to Claim 1 or 2, **characterized in that** spacers (27, 31, 34, 35) are provided in order to set the distance between the leaves (26, 30, 33, 38), and **in that** the at least one contact line (36, 37) runs in the region of the spacers (27, 31, 34, 35).

4. Leaf seal according to Claim 3, **characterized in that** the spacers (27, 31, 34, 35) are arranged in the outer end region of the leaves (26, 30, 33, 38).

5. Leaf seal according to Claim 3 or 4, **characterized in that** the spacers (27, 31) are formed on the leaves (26, 30) as regions of greater thickness.

6. Leaf seal according to Claim 5, **characterized in that** the spacers (27) have a constant thickness.

7. Leaf seal according to Claim 5, **characterized in that** the spacers (31) are designed with a thickness decreasing inward.

8. Leaf seal according to Claim 3 or 4, **characterized in that** the spacers (34, 35) are designed as elements embossed in the leaves (33).

9. Leaf seal according to Claim 8, **characterized in that** each leaf (33), in the radial direction, has at least two embossed spacers (34, 35) which are arranged one behind the other and fix the position of the leaves relative to one another.

10. Method of producing a leaf seal according to Claim 1, in which method the individual leaves (26, 30, 33, 38), being formed with at least one contact line (36, 37) which runs on both sides, are arranged and fixed in their positions characteristic of the subsequent leaf seal, and the leaves are welded to one another along the contact lines (36, 37) by means of electron beam welding, the leaves (38) being held in a housing (39) and being welded through the housing (39) to one another and to the housing (39).

11. Method according to Claim 10, **characterized in that** spacers (27, 31, 34, 35) integrated in the leaves (26, 30, 33, 38) are used for arranging the leaves (26, 30, 33, 38).

12. Method according to Claim 11, **characterized in that** the spacers (34, 35) are embossed in the leaves (33) by an embossing process.

13. Method according to Claim 11 or 12, **characterized in that**, after the leaves (26, 30, 33, 38) provided with the spacers (27, 31, 34, 35) have been produced, the leaves (26, 30, 33, 38) are put into a clamping device in which they are firmly oriented in their positions characteristic of the subsequent leaf seal.

14. Method according to Claim 10, **characterized in that** the welding is carried out in the axial direction.

## Revendications

1. Garniture d'étanchéité lamellaire (12), pour étancher un arbre tournant autour d'un axe, notamment dans une turbine à gaz (10), laquelle garniture d'étanchéité lamellaire (12) comprend une pluralité de lamelles (26, 30, 33, 38) espacées les unes des autres, qui sont disposées suivant un cercle concentrique autour de l'axe, et sont fixées en position au moyen de connexions soudées (40, 41, 42) réalisées par soudage par faisceau électronique, les lamelles (26, 30, 33, 38) étant orientées avec leurs faces essentiellement parallèlement à l'axe, les lamelles (26, 30, 33, 38) étant réalisées et disposées dans la garniture d'étanchéité lamellaire (12) de telle sorte qu'elles butent les unes contres les autres au niveau des arêtes latérales le long d'au moins une ligne de contact (36, 37) s'étendant sur plusieurs lamelles (26, 30, 33, 38), directement ou par le biais d'éléments d'espacement intermédiaires (27, 31, 34, 35), et les connexions soudées étant réalisées sous forme de cordons de soudure (40, 41, 42) guidés le long de l'au moins une ligne de contact (36, 37),
les lamelles (38) étant maintenues avec leur extrémité extérieure dans un boîtier (39) et étant soudées à travers le boîtier (39) au boîtier (39) et les unes aux autres.

2. Garniture d'étanchéité lamellaire selon la revendication 1, **caractérisée en ce que** la connexion des lamelles (38) les unes aux autres et au boîtier (39) s'effectue par le biais de cordons de soudure (40) s'étendant dans la direction axiale et disposés latéralement, qui s'étendent à travers le boîtier (39) jusqu'aux lamelles (38).

3. Garniture d'étanchéité lamellaire selon la revendication 1 ou 2, **caractérisée en ce que** pour l'ajustement de la distance entre les lamelles (26, 30, 33, 38), on prévoit des éléments d'espacement (27, 31, 34, 35) et **en ce que** l'au moins une ligne de contact (36, 37) s'étend dans la région des éléments d'espacement (27, 31, 34, 35).

4. Garniture d'étanchéité lamellaire selon la revendication 3, **caractérisée en ce que** les éléments d'espacement (27, 31, 34, 35) sont disposés dans la région d'extrémité extérieure des lamelles (26, 30, 33, 38).

5. Garniture d'étanchéité lamellaire selon la revendication 3 ou 4, **caractérisée en ce que** les éléments d'espacement (27, 31) sont réalisés sur les lamelles (26, 30) sous forme de régions de plus grosse épaisseur.

6. Garniture d'étanchéité lamellaire selon la revendication 5, **caractérisée en ce que** les éléments d'espacement (27) présentent une épaisseur constante.

7. Garniture d'étanchéité lamellaire selon la revendication 5, **caractérisée en ce que** les éléments d'espacement (31) sont réalisés avec une épaisseur diminuant vers l'intérieur.

8. Garniture d'étanchéité lamellaire selon la revendication 3 ou 4, **caractérisée en ce que** les éléments d'espacement (34, 35) sont réalisés sous forme d'éléments imprimés dans les lamelles (33).

9. Garniture d'étanchéité lamellaire selon la revendication 8, **caractérisée en ce que** chaque lamelle (33) présente, dans la direction radiale, au moins deux éléments d'espacement (34, 35) imprimés, disposés l'un derrière l'autre, qui fixent la position relative des lamelles les unes par rapport aux autres.

10. Procédé de fabrication d'une garniture d'étanchéité lamellaire selon la revendication 1, dans lequel procédé les lamelles individuelles (26, 30, 33, 38) sont disposées et fixées en formant au moins une ligne de contact (36, 37) s'étendant des deux côtés dans leurs positions caractéristiques pour la garniture d'étanchéité lamellaire ultérieure, et
les lamelles étant soudées les unes aux autres le long des lignes de contact (36, 37) au moyen d'un soudage par faisceau électronique, les lamelles (38) étant maintenues dans un boîtier (39) et étant soudées à travers le boîtier (39) au boîtier (39) et les unes aux autres.

11. Procédé selon la revendication 10, **caractérisé en ce que** pour l'agencement des lamelles (26, 30, 33, 38), on utilise des éléments d'espacement (27, 31, 34, 35) intégrés aux lamelles (26, 30, 33, 38).

12. Procédé selon la revendication 11, **caractérisé en ce que** les éléments d'espacement (34, 35) sont imprimés dans les lamelles (33) par un procédé de gaufrage.

13. Procédé selon la revendication 11 ou 12, **caractérisé en ce qu'**après la fabrication des lamelles (26, 30, 33, 38) munies des éléments d'espacement (27, 31, 34, 35), les lamelles (26, 30, 33, 38) sont introduites dans un dispositif de serrage dans lequel elles s'orientent fixement dans leurs positions caractéristiques pour la garniture d'étanchéité lamellaire ultérieure.

14. Procédé selon la revendication 10, **caractérisé en ce que** le soudage a lieu dans la direction axiale.
